# EUROPÄISCHE PATENTSCHRIFT

(11) **EP 2 695 026 B1**
(45) Veröffentlichungstag und Bekanntmachung des Hinweises auf die Patenterteilung: **09.12.2015**
(21) Anmeldenummer: 12712991.4
(22) Anmeldetag: 15.03.2012
(51) Int. Cl.: G05B 19/042

(54) **VORRICHTUNG UND SYSTEM ZUR BESTIMMUNG, OPTIMIERUNG ODER ÜBERWACHUNG ZUMINDEST EINER PROZESSGRÖßE**
DEVICE AND SYSTEM FOR DETERMINING, OPTIMIZING, OR MONITORING AT LEAST ONE PROCESS PARAMETER
DISPOSITIF ET SYSTÈME POUR LA DÉTERMINATION, L'OPTIMISATION OU LA SURVEILLANCE D'AU MOINS UNE GRANDEUR DE PROCESSUS

(30) Priorität: 07.04.2011 DE 102011006989
(43) Veröffentlichungstag der Anmeldung: 12.02.2014
(60) Teilanmeldung: 15183161.7
(73) Patentinhaber: Endress + Hauser GmbH + Co. KG., 79689 Maulburg (DE)
(72) Erfinder: Altendorf, Matthias, 79539 Lörrach (DE); Baret, Marc, F-68680 Kembs (FR)
(74) Vertreter: Andres, Angelika Maria
(86) Internationale Anmeldenummer: PCT/EP2012/054533
(87) Internationale Veröffentlichungsnummer: WO 2012/136457

(56) Entgegenhaltungen:
- WO-A1-2004/107069
- WO-A2-2004/038934

## Beschreibung

Die Erfindung betrifft eine Vorrichtung zur Bestimmung, Optimierung oder Überwachung zumindest einer Prozessgröße. Weiterhin wird ein System vorgestellt, das u.a. bevorzugt eine Vielzahl der zuvor genannten Vorrichtungen umfasst.

In der Automatisierungstechnik, insbesondere in der Prozessautomatisierungstechnik, werden vielfach Feldgeräte eingesetzt, die zur Bestimmung, Optimierung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, usw., welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein Geräte verstanden, die auf der Feldebene angeordnet sind. Eine Vielzahl solcher Feldgeräte wird von der Firma Endress + Hauser hergestellt und vertrieben.

Aus der WO 2004/107069 ist ein variables Feldgerät für die Prozessautomatisierungstechnik bekannt geworden, dessen einzelne Funktionen verteilt angeordnet sind. Das eigentliche Feldgerät stellt nur wenige Grundfunktionen, z.B. die Messwerterzeugung bereit, während anwendungsspezifische Funktionalitäten, wie z.B. Frequenz- oder Impulsausgänge als separate Funktionseinheiten ausgebildet sind, die vom Feldgerät räumlich getrennt angeordnet sind. Feldgeräte und Funktionseinheiten sind zwecks Datenaustausch an ein entsprechendes Kommunikationsmedium angeschlossen. Bei dem Kommunikationsmedium handelt es sich um eine Zweileiterversorgungsleitung. Alternativ sind auf dem Kommunikationsmedium mehrere Datenkanäle vorgesehen, so dass ein Mehrfachzugriff auf die angeschlossenen Einheiten möglich ist. Hierdurch ist das das Feldgerät variabel und anwendungsspezifisch konfigurierbar.

Aus der DE 10 2006 016 381 A1 ist eine Messvorrichtung zur Bestimmung und/oder Überwachung mindestens einer Prozessgröße bekannt geworden, wobei die Messvorrichtung als integrale Bestandteile eine Sensoreinheit, eine Ein/Ausgabeeinheit und eine Anzeigeeinheit umfasst. Die Sensoreinheit erzeugt Rohmesswerte, wobei aus den Rohmesswerten die Information über die Prozessgröße ableitbar ist. Über die Ein/Ausgabeeinheit werden Daten empfangen oder weitergeleitet. Auf der Anzeigeeinheit werden die von einer Steuereinheit bereitgestellten, die Prozessgröße repräsentierenden Informationen dargestellt. Die Kommunikation zwischen der Sensoreinhelt, der Ein/Ausgabeeinheit und der Anzeigeeinheit einerseits und der Steuereinheit erfolgt über einen der in der Automatisierungstechnik gebräuchlichen Feldbusse.

Aus der WO 2004/038934 ist ein räumlich verteilt angeordnetes Steuerungssystem bekannt, bei dem die verschiedenen Feldgeräte räumlich voneinander entfernt angeordnet sind und ihre Daten mittels einer Drahtlosdatenübertragungstechnik mit einer Basisstation austauschen. Die von dem Feldgerät stammenden Daten werden in einem Datenspeicher abgelegt, der ebenfalls in Kommunikationsverbindung zu der Basisstation steht. Auf diese Weise können die übertragenen Daten zu einem späteren Zeitpunkt mittels einer virtuellen Transmitterapplikation ausgewertet werden.

Der Erfindung liegt die Aufgabe zugrunde, eine Vorrichtung und ein System zur Bestimmung, Optimierung oder Überwachung zumindest einer Prozessgröße einfach und damit kostengünstig auszugestalten.

Die erfindungsgemäße Vorrichtung weist die folgende Komponenten auf: Eine Messeinheit bzw. ein Messmodul mit einem Sensorelement und einer Messelektronik, zumindest einer von der Messeinheit entfernt angeordneten Regel/Auswerte/Recheneinheit und/oder einer von der Messeinheit und der Regel/Auswerte/Recheneinheit entfernt angeordneten Ein/Ausgabeeinheit. Der Regel/Auswerte/Recheneinheit und/oder die Ein/Ausgabeeinheit kommunizieren mit der erfindungsgemäßen Messvorrichtung über eine erste Schnittstelle und eine zweite Schnittstelle. Die Messelektronik steuert das Sensorelement an und leitet die Messsignale als unbearbeitete Rohmesswerte über die Schnittstellen an die Regel/Auswerte/Recheneinheit weiter. Die von der Messeinheit entfernt angeordnete Regel/Auswerte/Rechen-einheit bestimmt, verbessert und/oder überwacht anhand der Rohmesswerte die Prozessgröße. Die Information über die Prozessgröße wird über die Ein/Ausgabeeinheit verfügbar gemacht.

In der Messeinheit sind somit nur noch die Vorort für die Messwerterfassung unbedingt erforderlichen funktionalen Komponenten integriert, wie etwa im Falle eines Füllstandsmessgeräts die Signalerzeugungseinheit und die Sende- und Empfangseinheit für die Ultraschall- oder Mikrowellen-Messsignale. Die Aufbereitungs- und Weiterverarbeitungsfunktionen ebenso wie die Ein- und Ausgabefunktionen sind in eine "zentralen" Regel/Auswerte/Recheneinheit bzw. eine "zentralen" Ein/Ausgabeeinheit ausgelagert. Die Regel/Auswerte/Recheneinheit ist bevorzugt so ausgestaltet, dass die von den unterschiedlichsten Messeinheiten gelieferten Rohmesswerte mit der korrekten Soft- und/oder Hardware aufbereitet und weiterverarbeitet werden können.

Gemäß einer bevorzugten Ausgestaltung der erfindungsgemäßen Vorrichtung ist die Messelektronik auf einem FPGA Chip oder auf einem dynamisch rekonfigurierbaren FPGA Chip oder auf einem ASIC oder auf einem Speicherbaustein realisiert. Darüber hinaus wird vorgeschlagen, dass die Regel/Auswerte/Recheneinheit auf einem FPGA Chip oder auf einem dynamisch rekonfigurierbaren FPGA Chip oder auf einem ASIC oder auf einem Speicherbaustein realisiert ist.

Wird ein dynamisch rekonfigurierbarer FPGA Chip verwendet, so können beispielsweise die funktionalen Soft- und/oder Hardwarekomponenten für die korrespondierende Messeinheit, die gerade die Rohmesssignale liefert, in Echtzeit konfiguriert werden. Hierdurch ist die Regel/Auswerte/Rechen-einheit in hohem Maße flexibel an die jeweiligen Anforderungen anpassbar.

Weiterhin wird es Im Zusammenhang mit der erfindungsgemäßen Vorrichtung als vorteilhaft angesehen, wenn im Falle der Verwendung eines dynamisch rekonfigurierbaren FPGA Chips ein permanent konfigurierter Bereich vorgesehen ist, in dem ein Mikroprozessor permanent konfiguriert ist.

Bevorzugt ist die Regel/Auswerte/Recheneinheit auf einem Handbedientool oder einem Rechner oder - allgemein gesprochen - auf einer ortsungebundenen Bedieneinheit realisiert. Beispielsweise kann ein Smart Phone oder ein Smart Pad oder eine sonstige ortsungebundene Bedieneinheit verwendet werden. Bevorzugt wird die Software für die Regel/Auswerte/Recheneinheit in Abhängigkeit von der jeweiligen Messeinheit als Apps bzw. als applikationsorientierte Softwareeinheit von einem Server heruntergeladen. Dieser Server wird beispielsweise von dem Gerätehersteller bereitgestellt. Diese Lösung hat den Vorteil, dass immer die aktuelle Version der Software in der Regel/Auswerte/Recheneinheit verfügbar ist.

Bevorzugt handelt es sich bei dem Server übrigens um eine WebServer, so dass der Zugriff über den Browser eines Rechners erfolgen kann. Es versteht sich von selbst, dass es sich bei dem Server jedoch um einen beliebigen Server handeln kann. So kann auch ein OPC-US Server eingesetzt werden.

Bezüglich des erfindungsgemäßen Systems wird die Aufgabe dadurch gelöst, dass eine Vielzahl von Messeinheiten mit der Regel/Auswerte/Rechen-einheit über geeignete Kommunikationsverbindungen verbunden sind. Die Regel/Auswerte/Recheneinheit verarbeitet unter Nutzung der entsprechenden AuswerteHardware und/oder AuswerteSoftware die von den unterschiedlichen Messeinheiten gelieferten Rohmesswerte weiter und bestimmt, verbessert und/oder überwacht die entsprechende Prozessgröße, über die die Messeinheit Information liefern soll.

Das erfindungsgemäße System zeigt u.a. Elemente eines Computer Netwerks. In diesem Netzwerk finden sich Messvorrichtungen 1 für Prozessgrößen, wie sie zuvor bereits beschrieben wurden. Durch die erfindungsgemäße Lösung kann der Kunde sowohl auf die Vorort-Anzeige-Infrastruktur, also die sog. HMI (Human Machine Interface), als auch auf die entsprechende Infrastruktur betreffend Ein- und Ausgängen verzichten. Neben der Vorort-Infrastruktur für die Hardware kann darüber hinaus auch die Vorort-Infrastruktur für die Software verzichtet werden, was erhebliche Einsparungen mit sich bringt.

Die Vernetzung der einzelnen Systemkomponenten erfolgt vorteilhafter Weise über geeignete Kommunikationsverbindungen. Bei den Kommunikationsverbindungen handelt es sich entweder um drahtgebundene Verbindungen oder um drahtlose Verbindungen. Bevorzugt werden in dem erfindungsgemäßen System bereits vorhandene Netzinfrastrukturen, also insbesondere Internet- oder Intranetstrukturen verwendet. Somit kann die Regel/Auswerte/Recheneinheit, die u.a. die Information über die Prozessgröße unter Verwendung geeigneter Algorithmen bereitstellt, Teil eines üblichen PCs oder Laptops sein. Da entsprechende PCs und Laptops weltweit vorhanden sind, steht die von den Messeinheiten gelieferte und anschließend weiter-verarbeitete Information im Prinzip an jedem beliebigen Ort zeitlich zur Verfügung. Entsprechendes gilt für die Ein/Ausgabeeinheit, da jeder PC oder Laptop ebenso wie jedes Handbedientool an Display und eine Eingabemöglichkeit aufweist

Weiterhin kann mittels der Regel/Auswerte/Recheneinheit beispielsweise ein Alarmmanagement, basierend auf Diagnoseprogrammen für die einzelnen Messeinheiten oder Teile des erfindungsgemäßen Systems, oder die Konfigurierung oder Parametrierung der Messeinheiten und/oder des Systems durchgeführt werden. Es versteht sich von selbst, dass die zuvor genannten Funktionalitäten auch auf mehrere Regel/Auswerte/Recheneinheiten, die sich an unterschiedlichen Standorten befinden, aufgeteilt sein können. Ebenso ist es möglich, die Informationen, die von unterschiedlichen Messeinheiten geliefert werden, in gewünschter Art und Weise miteinander zu verknüpfen um für den Kunden oder auch den Gerätehersteller einen Mehrwert zu generieren. Somit wird erfindungsgemäß aus einem Transmitter, der einer jeden Messeinheit physisch zugeordnet ist, ein virtueller Transmitter, der durchaus auch in der Lage ist, mehrere bzw. eine Vielzahl von Messeinheiten in der gewünschten Art und Weise zu ergänzen. Darüber hinaus ist es möglich, von ganz unterschiedlichen Standorten Zugriff auf die Messeinheiten zu haben. Es versteht sich in diesem Zusammenhang von selbst, dass ggf. Maßnahmen zur Sicherstellung autorisierter Zugriffe auf die Messeinheiten oder auf das System ergriffen werden müssen. Gleiches gilt im Hinblick auf die Sicherheit bei der Datenübertragung.

Als besonders vorteilhaft wird es darüber hinaus erachtet, wenn eine Datenbank vorgesehen ist, in der eine Vielzahl von Datensätzen mit Rohmesswerten unterschiedlicher Messeinheiten und/oder mit weiterverarbeiteten Rohmesswerten von unterschiedlichen Messeinheiten gespeichert sind, wobei die Datensätze Rohmesswerte und/oder weiterverarbeitete Rohmesswerte widerspiegeln, die in Abhängigkeit von unterschiedlichen Prozess- und/oder Gerätebedingungen in unterschiedlichen Applikationen unmittelbar oder durch Simulation ermittelt worden sind. Jedem Datensatz mit Rohmesswerten und/oder weiterverarbeiteten Rohmesswerten ist ein Parametersatz zugeordnet, der eine optimierte Einstellung der entsprechenden Messeinheit und/oder der Regel/Auswerte/Recheneinheit in Abhängigkeit von definierten Prozess- und/oder Gerätebedingungen wiedergibt. Beispielsweise kann es sich bei den Parametern um Filtereinstellungen handeln.

Mit einem solchen System kann für den Nutzer bzw. Anwender ein Mehrwert in Form einer Anreicherung von Informationen, von Know-how und/oder von Messdaten bereitgestellt werden. Dieser Mehrwert beruht auf den Informationen, die von ggf. unterschiedlichen ortsungebundene Bedieneinheiten auf Basis der Software für die Regel/Auswerte/Recheneinheit geliefert werden. Hierbei haben die Informationen im Normalfall einen Bezug zu den einzelnen Messeinheiten und sind gleichzeitig in Echtzeit verfügbar. Auf der Regel/Auswerte/Recheneinheit bzw. auf den Regel/Auswerte/Recheneinheiten sind entsprechende Apps bzw. applikationsorientierte Softwaretools installiert.

Alternativ sind die Regel/Auswerte/Recheneinheit bzw. auf die Regel/Auswerte/Recheneinheiten auf mindestens einem Computer installiert. Der Zugriff erfolgt dann beispielsweise über Java oder HTML. Weiterhin ist vorgesehen, dass sich die zumindest eine Regel/Auswerte/Recheneinheit die geeignete Software von einem Server via WebServices beschafft.

Wie bereits zuvor erwähnt, ist es im Zusammenhang mit der erfindungsgemäßen Lösung besonders vorteilhaft, wenn der virtuelle Transmitter, also die Regel/Auswerte/Recheneinheit, auf einem i-Phone, einem i-Pad oder einem sonstigen Handbedientool implementiert ist.

Die Erfindung wird anhand der nachfolgenden Figuren näher erläutert. Es zeigt:
Fig. 1: eine schematische Darstellung einer aus dem Stand der Technik bekannten Messvorrichtung,
Fig. 2: eine schematische Darstellung einer bevorzugten Ausgestaltung der erfindungsgemäßen Messvorrichtung,
Fig. 3: eine schematische Darstellung einer vorteilhaften Ausgestaltung des erfindungsgemäßen Systems und
Fig. 4: ein Flussdiagramm, das ein Verfahren zur Änderung der Konfiguration der erfindungsgemäßen Messvorrichtung beschreibt.

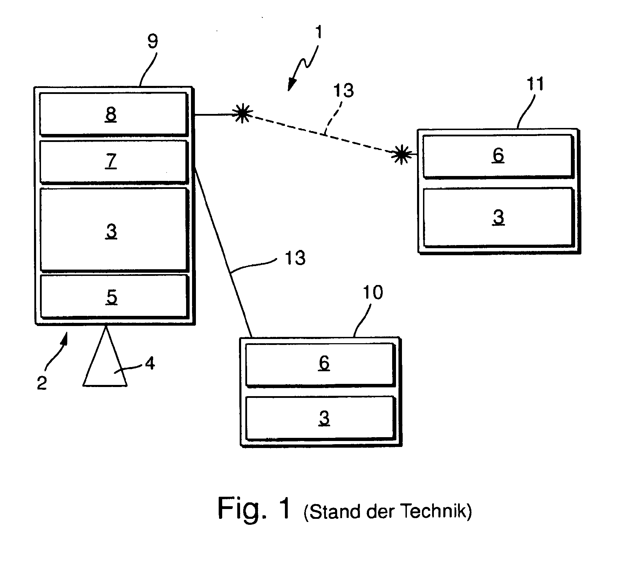

Fig. 1 zeigt eine schematische Darstellung einer Messvorrichtung 1, wie sie aus dem Stand der Technik bekannt geworden ist. Die Messvorrichtung 1 besteht aus einem Sensorelement 4, das so ausgestaltet ist, dass es eine gewünschte physikalische, chemische oder biologische Prozessgröße bestimmen kann, und einem Transmitter 9, der im gezeigten Fall eine Messelektronik 5, eine Regel/Auswerte/Recheneinheit 3, eine erste Schnittstelle 7 und eine zweiten Schnittstelle 8 aufweist. Über die Schnittstellen 7, 8 ist der Transmitter 9 mit einer lokalen Bedieneinheit, beispielsweise einem Handbedientool 10 verbunden. Weiterhin ist dem Handbedientool 10 im dargestellten Fall eine Regel/Auswerte/Recheneinheit 3 zugeordnet. Oftmals ist die lokale Bedieneinheit 10 bei bekannten Lösungen integraler Bestandteil der Messvorrichtung 1.

Über die zweite Schnittstelle 8 ist der Transmitter 9 mit einem entfernt angeordneten Rechner 11 verbunden. Dem Rechner 11 ist - ebenso wie dem Handbedientool 10 - eine Ein/Ausgabeeinheit 6 und eine Regel/Auswerte/Recheneinheit zugeordnet. Die Kommunikationsverbindung 13 zwischen dem Transmitter 9 und der lokalen Bedieneinheit 10 bzw. dem Rechner 11 erfolgt entweder drahtgebunden oder drahtlos, z.B. über Wireless HART, einen der in der Automatisierungstechnik etablierten Feldbusse (HART, Fieldbus Foundation, Profibus, usw.)

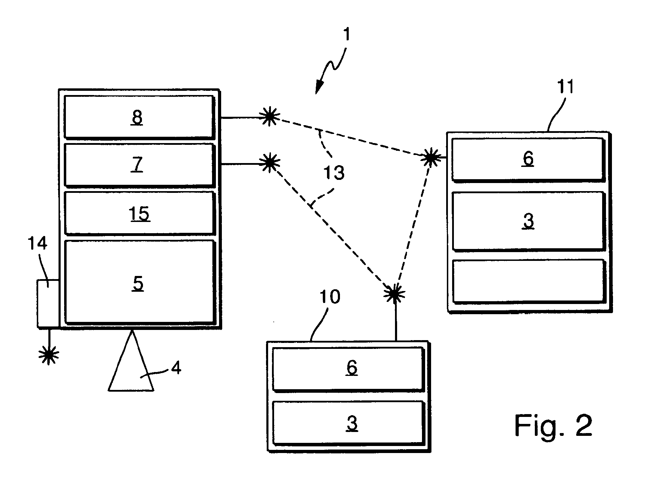

Fig. 2 zeigt eine schematische Darstellung einer bevorzugten Ausgestaltung der erfindungsgemäßen Messvorrichtung 1 zur Bestimmung, Optimierung oder Überwachung zumindest einer Prozessgröße.

Die Messvorrichtung 1 umfasst ein Sensorelement 4 und eine Messelektronik 5. Beide zusammen bilden die Messeinheit 2 bzw. das Messmodul 2. Entfernt von der Messeinheit 2 angeordnet, befindet sich die Regel/Auswerte/Recheneinheit 3 und/oder die von der Messeinheit 2 und ggf. der Regel/Auswerte/Recheneinheit 3 entfernt angeordnete Ein/Ausgabeeinheit. Die Kommunikation zwischen der Messelektronik 5 bzw. der Messvorrichtung 1 und der Regel/Auswerte/Recheneinheit 3 und/oder der Ein/Ausgabeeinheit 6 erfolgt über die Schnittstellen 7, 8. Die Messelektronik 5 steuert das Sensorelement 4 so an, dass die als Rohmesswerte vorliegenden Messsignale, die die Prozessgröße repräsentieren, über die Schnittstellen 7, 8 an die Regel(Auswerte/Recheneinheit 3 weitergeleitet werden. Erst in der entfernt von der Messeinheit 2 angeordnete Regel/Auswerte/Recheneinheit 3 wird anhand der Rohmesswerte die entsprechende Prozessgröße bestimmt, verbessert und/oder überwacht. Information über die Prozessgröße wird über die Ein/Ausgabeeinheit 6 verfügbar gemacht.

Wie bereits an vorhergehender Stelle erwähnt, ist die Messelektronik 5 beispielsweise auf einem FPGA Chip, einem dynamisch rekonfigurierbaren FPGA Chip, einem ASIC oder einem Speicherbaustein realisiert. Ebenso kann die Regel/Auswerte/Recheneinheit 3 auf einem FPGA Chip, einem dynamisch rekonfigurierbaren FPGA Chip, einem ASIC oder einem Speicherbaustein realisiert sein.

Aus entsprechenden Anmeldungen der Anmelderin ist es bereits bekannt, dass bei Verwendung eines dynamisch rekonfigurierbaren FPGA Chips ein permanent konfigurierter Bereich vorgesehen ist, in dem ein Mikroprozessor permanent konfiguriert ist.

Die Regel/Auswerte/Recheneinheit 3 kann sowohl auf einem Handbedien-tool 10 als auch auf einem Rechner 11 installiert sein. Generell gesprochen kann sich die Regel/Auswerte/Recheneinheit 3 auf einer beliebigen ortsungebundene Bedieneinheit befinden. Bei dem Handbedientool 10 kann es sich beispielsweise um einen Laptop, ein iPhone oder ein iPad handeln. Der Rechner 11 kann z.B. ein PC oder ein iPad sein. Hierbei ist es besonders vorteilhaft, wenn die Software für die Regel/Auswerte/Recheneinheit 3 in Abhängigkeit von der verwendeten Messeinheit 2 als App oder als applikationsorientierte Softwareeinheit von einem Server 12 herunterladbar ist. Somit ist sichergestellt, dass stets die aktuelle Version der Software verfügbar ist. Die Identifikation der Messvorrichtung 1 bzw. der Messelektronik 4 erfolgt z.B. über ein RF-ID Tag.

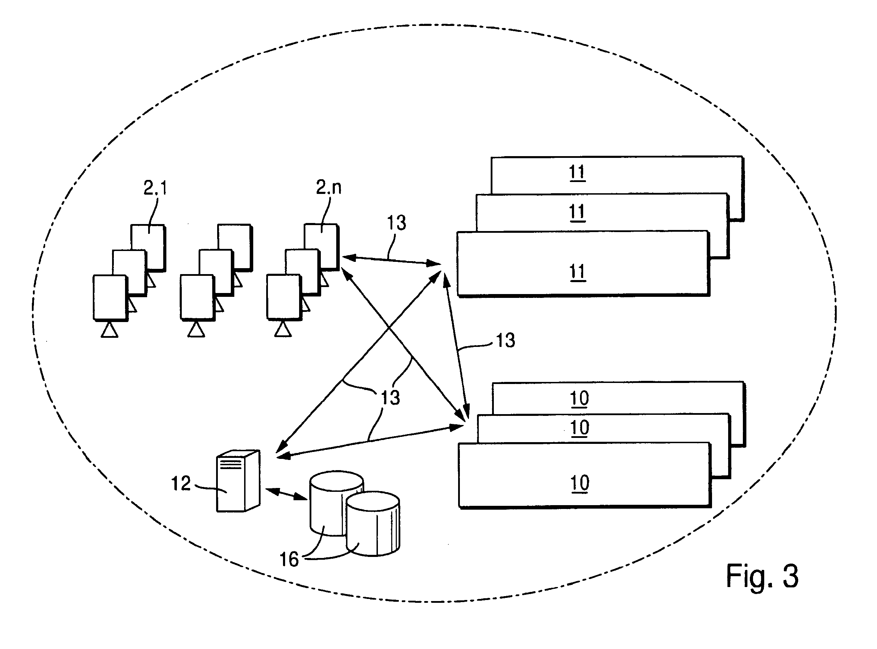

Fig. 3 zeigt eine schematische Darstellung einer vorteilhaften Ausgestaltung des erfindungsgemäßen Systems, bei dem eine Vielzahl der in Fig. 2 beschriebenen Messeinheiten 2.1, ... 2.n ihre Rohmesswerte an eine oder einige wenige entfernt angeordnete/n Regel/Auswerteeinheit/en übertragen. Die Messeinheiten 2.1, ... 2.n sind beispielsweise in einer Automatisierungsanlage integriert; sie können aber ebenso gut an weit voneinander entfernten Standorten angeordnet sein. Zwecks Datenaustausch werden bevorzugt drahtlose Kommunikationsverbindungen 13 genutzt. Unter Nutzung der entsprechenden AuswerteHardware und/oder AuswerteSoftware verarbeitet die Regel/Auswerte/Recheneinheit 3, die entweder einem Handbedientool 10 oder einem Rechner 11 zugeordnet ist, die von den unterschiedlichen Messeinheiten 2.1, ... 2.n gelieferten Rohmesswerte und bestimmt, verbessert und/oder überwacht die entsprechende Prozessgröße. Über einen Server 12, bei dem es sich bevorzugt um einen WebServer handelt - dies ist vorteilhaft, da hierdurch die weit verbreitete Rechner-Infrastruktur genutzt werden kann, - kann die z.Zt. aktuelle Auswertesoftware heruntergeladen werden.

Weiterhin ist zumindest eine Datenbank 16 vorgesehen, in der eine Vielzahl von Datensätzen mit Rohmesswerten der unterschiedlichen Messeinheiten 2.1, .... 2.n und/oder mit weiterverarbeiteten Rohmesswerten der unterschiedlichen Messeinheiten (2.1, .... 2.n) gespeichert sind, wobei die Datensätze Rohmesswerte und/oder weiterverarbeitete Rohmesswerte widerspiegeln, die in Abhängigkeit von unterschiedlichen Prozess- und/oder Gerätebedingungen in unterschiedlichen Applikationen unmittelbar oder durch Simulation ermittelt worden sind. Bevorzugt ist jedem Datensatz mit Rohmesswerten und/oder weiterverarbeiteten Rohmesswerten ein Parametersatz zugeordnet, der eine optimierte Einstellung der entsprechenden Messeinheit 2.1, ..., 2.n und/oder der Regel/Auswerte/Recheneinheit 3 in Abhängigkeit von den definierten Prozess- und/oder Gerätebedingungen wiedergibt. Nähere Information zu dieser Lösung finden sich in der nicht vorveröffentlichten Deutschen Patentanmeldung DE 10 2010 044 182.1 der Anmelderin. Die entsprechenden Passagen sind integraler Bestandteil der vorliegenden Anmeldung.

Darüber hinaus eröffnet das erfindungsgemäße System die Möglichkeit, einen Mehrwert in Form einer Anreicherung von Informationen, Know-how und Messdaten zu erreichen. Der Mehrwert beruht auf den Informationen, die von den ortsungebundene Bedieneinheiten 10, 11 auf Basis der Software für die Regel/Auswerte/Recheneinheit 3 in Abhängigkeit von den einzelnen Messeinheiten 2.1,....2.n geliefert werden, auf denen die Apps bzw. die applikationsorientierten Softwareeinheiten arbeiten. Dieser Mehrwert kann beispielsweise in der Durchführung von Advanced Diagnostics Funktionen bestehen. Weiterhin kann eine Optimierung des Energieverbrauchs in der Automatisierungsanlage einen wichtigen Mehrwert für den Nutzer bzw. Anlagenbetreiber darstellen. Wichtige Information für den Gerätehersteller und den Anlagenbetreiber stellen Wartungsinformationen dar.

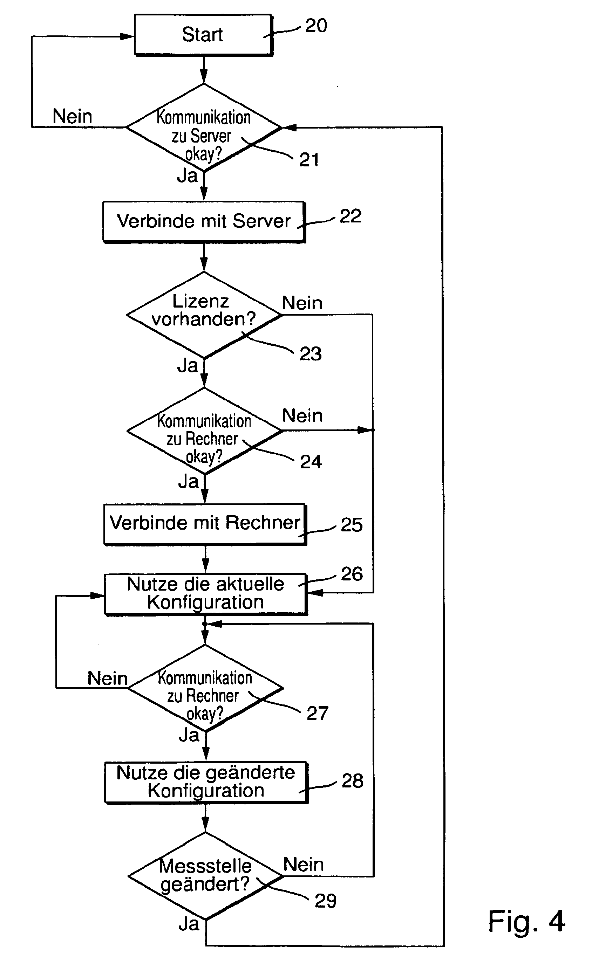

Fig. 4 zeigt ein Flussdiagramm, das ein bevorzugtes Verfahren zur Änderung des Konfigurationsdatensatzes für die Messelektronik 5 der erfindungsgemäßen Messvorrichtung 1 beschreibt.

Das Programm startet bei Programmpunkt 20. Unter dem Programmpunkt 21 wird überprüft, ob die Kommunikationsverbindung zu dem Server 12, hier einem Lizenz-Server, in Ordnung ist. Sobald die Kommunikationsverbindung steht (Programmpunkt 22), wird unter dem Programmpunkt 23 überprüft, ob die Berechtigung zum Zugriff auf den Lizenz-Server 12 vorliegt. Beispielsweise ist die Lizenz und/oder die Anzahl der herunterladbaren Konfigurationsdatensätze für die Messelektronik 5 der Messvorrichtung 1 der Seriennummer der Messvorrichtung 1 zugeordnet. Selbstverständlich kann die Lizenz auch nutzerbezogen vergeben werden. Die Lizenz wird bevorzugt jeweils für eine bestimmte Anzahl von Zugriffen auf den Lizenz-Server 12 vergeben. Solange die maximale Anzahl der erlaubten Zugriffe nicht überschritten wird, wird versucht, die Verbindung zu dem Rechner 11, bei dem es sich bevorzugt um einen Konfigurations-Server 11 handelt, herzustellen. Dargestellt sind die zuvor genannten Schritte unter den Programmpunkten 24, 25.

Ist die maximale Anzahl von erlaubten, lizenzierten Zugriffen überschritten, so arbeitet die Messvorrichtung 1 weiterhin mit der aktuellen, der Messvorrichtung bislang zugeordneten Konfiguration der Messelektronik 5, bis eine entsprechende Lizenz vorliegt (Programmpunkt 26). Für den Fall, dass die Kommunikationsverbindung zu dem Konfigurationsserver 11 nicht aufgebaut werden kann, wird die Messvorrichtung 1 gleichfalls mit dem vorhandenen Konfigurationsdatensatz weiter betrieben. Aufgeführt ist dieser Schritt unter dem Programmpunkt 27.

Kann die Kommunikationsverbindung zu dem Konfigurationsserver 11 hergestellt werden, so wird unter dem Programmpunkt 28 ein geänderter Konfigurationsdatensatz für die Messelektronik 5 von dem Konfigurationsserver 11 herunter geladen und anschließend zum Betreiben der Messvorrichtung 1 genutzt. Der Konfigurationsdatensatz dient beispielsweise zum Programmieren des FPGA Chips. Sobald die Messvorrichtung 1 für eine geänderte Messstelle genutzt werden soll (z.B. Druckmessstelle anstelle einer Füllstandsmessstelle) springt das Programm auf den Programmpunkt 21 zurück. Erfolgt unter Programmpunkt 29 keine Änderung der Messstelle so versucht, so springt das Programm auf den Programmpunkt 27 zurück.

### Bezugszeichenliste

- 1: erfindungsgemäße Messvorrichtung
- 2: Messeinheit
- 3: Regel/Auswerte/Recheneinheit
- 4: Sensorelement
- 5: Messelektronik
- 6: Ein/Ausgabeeinheit
- 7: erste Schnittstelle
- 8: zweite Schnittstelle
- 9: Transmitter
- 10: Handbedientool
- 11: Rechner
- 12: Server
- 13: Kommunikationsverbindung
- 14: RF-ID Tag
- 15: permanent konfigurierter Bereich
- 16: Datenbank

## Patentansprüche

1. Vorrichtung zur Bestimmung oder Überwachung zumindest einer Prozessgröße, aufweisend ein Sensorelement (4) und eine Messelektronik (5), die eine Messeinheit (2) bilden, und zumindest eine von der Messeinheit (2) entfernt angeordnete Regel/Auswerte/Recheneinheit (3) und eine von der Messeinheit (2) und der Regel/Auswerte/Recheneinheit (3) entfernt angeordnete Ein/Ausgabeeinheit (6), wobei die Messelektronik (5) das Sensorelement ansteuert und die Messsignale als unbearbeitete Rohmesswerte über die Schnittstellen (7, 8) an die Regel/Auswerte/Recheneinheit (3) weiterleitet, und wobei die entfernt von der Messeinheit (2) angeordnete Regel/Auswerte/Recheneinheit (3) anhand der Rohmesswerte die Prozessgröße bestimmt, verbessert und/oder überwacht und über die Ein/Ausgabeeinheit (6) verfügbar macht, wobei die Messelektronik (5) auf einem FPGA Chip realisiert ist und die Regel/Auswerte/Recheneinheit (3) auf einem dynamisch rekonfigurierbaren FPGA Chip realisiert ist.

2. Vorrichtung nach Anspruch 1,
wobei im Falle der Verwendung eines dynamisch rekonfigurierbaren FPGA Chip ein permanent konfigurierter Bereich vorgesehen ist, in dem ein Mikroprozessor permanent konfiguriert ist.

3. Vorrichtung nach einem oder mehreren der vorhergehenden Ansprüche,
wobei die Regel/Auswerte/Recheneinheit auf einem Handbedientool (10) oder einem Rechner (11) oder einer ortsungebundene Bedieneinheit realisiert ist.

4. Vorrichtung nach Anspruch 3, wobei es sich bei dem Handbedientool (10) um z.B. ein Smart Phone oder ein Smart Pad oder ortsungebundene Bedieneinheit handelt, wobei die Software für die Regel/Auswerte/Recheneinheit(3) in Abhängigkeit von der jeweiligen Messeinheit (2) als Apps oder als applikationsorientierte Softwareeinheit von einem Server (12) herunterladbar ist.

5. System, bestehend aus mehreren der in zumindest einem der Ansprüche 1 - 4 beschriebenen Vorrichtungen,
wobei eine Vielzahl von Messeinheiten (2.1, ... 2.n) mit der Regel/Auswerte/Recheneinheit (3) über entsprechende Kommunikationsverbindungen (13) verbunden sind und
wobei die Regel/Auswerte/Recheneinheit(3) unter Nutzung der entsprechenden Auswerte-Hardware und/oder Auswerte-Software die von den unterschiedlichen Messeinheiten (2.1, ... 2.n) gelieferten Rohmesswerte weiterverarbeitet und die entsprechende Prozessgröße bestimmt, verbessert und/oder überwacht.

6. System nach Anspruch 5,
wobei es sich bei den Kommunikationsverbindungen (13) um drahtgebundene Verbindungen und/oder um drahtlose Verbindungen handelt.

7. System nach Anspruch 6,
wobei eine Datenbank (14) vorgesehen ist, in der eine Vielzahl von Datensätzen mit Rohmesswerten unterschiedlicher Messeinheiten (2.1, .... 2.n) und/oder mit weiterverarbeiteten Rohmesswerten der unterschiedlichen Messeinheiten (2.1, .... 2.n) gespeichert sind, wobei die Datensätze Rohmesswerte und/oder weiterverarbeitete Rohmesswerte widerspiegeln, die in Abhängigkeit von unterschiedlichen Prozess- und/oder Gerätebedingungen in unterschiedlichen Applikationen unmittelbar oder durch Simulation ermittelt worden sind, und wobei jedem Datensatz mit Rohmesswerten und/oder weiterverarbeiteten Rohmesswerten ein Parametersatz zugeordnet ist, der eine optimierte Einstellung der entsprechenden Messeinheit ((2.1, .... 2.n) und/oder der Regel/Auswerte/Recheneinheit(3) in Abhängigkeit von den definierten Prozess- und/oder Gerätebedingungen wiedergibt.

## Claims

1. Apparatus for determining or monitoring at least one process variable, comprising a sensor element (4) and measuring electronics (5), which form a measuring unit (2), and at least a control/evaluation/computer unit (3) which is arranged at a distance from the measuring unit (2), and an input/output unit (6) arranged at a distance from the measuring unit (2) and the control/evaluation/computer unit (3), wherein the measuring electronics (5) control the sensor element and forward the measuring signals as unprocessed raw measured values to the control/evaluation/computer unit (3) via the interfaces (7, 8), and wherein the control/evaluation/computer unit (3) arranged at a distance from the measuring unit (2) uses the raw measured values to determine the process variable, improve and/or monitor it and make it available via the input/output unit (6), wherein the measuring electronics (5) are implemented on an FPGA chip and the control/evaluation/computer unit (3) is implemented on an FPGA chip which can be reconfigured dynamically.

2. Apparatus as claimed in Claim 1,
wherein, if an FPGA chip which can be reconfigured dynamically is used, a permanently configured area is provided in which a microprocessor is permanently configured.

3. Apparatus as claimed in one or more of the previous claims,
wherein the control/evaluation/computer unit is implemented on a handheld terminal (10) or a computer (11) or a control unit unattached to a particular location.

4. Apparatus as claimed in Claim 3,
wherein the handheld terminal (10) is, for example, a smart phone or a smart pad or a control unit unattached to a particular location, wherein the software for the control/evaluation/computer unit (3) can be downloaded from a server (12) as an app or as an application-oriented software unit depending on the specific measuring unit (2).

5. System consisting of several of the apparatuses described in at least one of the Claims 1 to 4,
wherein a multitude of measuring units (2.1, ..., 2.n) are connected to the control/evaluation/computer unit (3) via appropriate communication connections (13) and wherein, using the appropriate evaluation hardware and/or evaluation software, the control/evaluation/computer unit (3) processes further the raw measured values supplied by the different measuring units (2.1, ..., 2.n) and determines, improves and/or monitors the corresponding process variable.

6. System as claimed in Claim 5
wherein the communication connections (13) are wired connections and/or wireless connections.

7. System as claimed in Claim 6
wherein a database (14) is provided, said database storing a variety of data records with raw measured values from various measuring units (2.1, ..., 2.n) and/or with processed raw measured values from various measuring units (2.1, ..., 2.n), wherein the data records reflect raw measured values and/or processed raw measured values which have been determined directly or by simulation depending on different process and/or device conditions in different applications, and wherein a parameter set is assigned to every data record with raw measured values and/or processed raw measured values, said parameter set reflecting an optimized setting of the corresponding measuring unit (2.1, ..., 2.n) and/or the control/evaluation/computer unit (3) depending on the defined process and/or device conditions.

## Revendications

1. Dispositif destiné à la détermination ou la surveillance d'au moins une grandeur process, comportant un élément détecteur (4) et une électronique de mesure (5), qui forment une unité de mesure (2), et au moins une unité de régulation / d'exploitation / de calcul (3) disposée à distance de l'unité de mesure (2) et une unité d'entrée / sortie disposée à distance de l'unité de mesure (2) et de l'unité de régulation / d'exploitation / de calcul (3), l'électronique de mesure (5) pilotant l'élément détecteur et transmettant les signaux de mesure en tant que valeurs mesurées brutes non traitées par l'intermédiaire des interfaces (7, 8) à l'unité de régulation / d'exploitation / de calcul (3), et l'unité de régulation / d'exploitation / de calcul (3) disposée à distance de l'unité de mesure (2) déterminant, améliorant et/ou surveillant la grandeur process à l'aide des valeurs mesurées brutes, et les rendant disponibles par l'intermédiaire de l'unité d'entrée / sortie (6), l'électronique de mesure (5) étant réalisée sur une puce FPGA et l'unité de régulation / d'exploitation / de calcul (3) étant réalisée sur une puce FPGA reconfigurable dynamiquement.

2. Dispositif selon la revendication 1,
pour lequel est prévue, en cas d'utilisation d'une puce FPGA reconfigurable dynamiquement, une zone configurée en permanence, dans laquelle un microprocesseur est configuré en permanence.

3. Dispositif selon l'une ou plusieurs des revendications précédentes,
pour lequel l'unité de régulation / d'exploitation / de calcul est réalisée sur un outil portable (10) ou sur un ordinateur (11) ou sur une unité de commande locale.

4. Dispositif selon la revendication 3,
pour lequel il s'agit, concernant l'outil portable (10), par exemple d'un smartphone ou d'un smartpad ou d'une unité de commande locale, le logiciel pour l'unité de régulation / d'exploitation / de calcul (3) pouvant être téléchargé depuis un serveur (12) en fonction de l'unité de mesure (2) respective sous la forme d'applications ou en tant qu'unité logicielle orientée application.

5. Système constitué de plusieurs des dispositifs décrits dans au moins l'une des revendications 1 à 4,
pour lequel un grand nombre d'unités de mesure (2.1, ..., 2.n) sont reliées avec l'unité de régulation / d'exploitation / de calcul (3) par l'intermédiaire de liaisons de communication (13) appropriées et pour lequel l'unité de régulation / d'exploitation / de calcul (3), en utilisant le matériel d'exploitation et le logiciel d'exploitation appropriés, traite les valeurs mesurées brutes fournies par les différentes unités de mesure (2.1, ..., 2.n) et détermine, améliore et/ou surveille la grandeur process correspondante.

6. Système selon la revendication 5
pour lequel il s'agit, concernant les liaisons de communication (13), de liaisons filaires et/ou de liaisons sans fil.

7. Système selon la revendication 6
pour lequel est prévu une base de données (14), dans laquelle sont mémorisées un grand nombre de blocs de données avec des valeurs mesurées brutes provenant d'unités de mesure différentes (2.1, ..., 2.n) et/ou avec des valeurs mesurées brutes traitées provenant des unités de mesure différentes (2.1, ..., 2.n), les blocs de données reflétant les valeurs mesurées brutes et/ou les valeurs mesurées brutes traitées, qui ont été déterminées, directement ou par simulation, en fonction de différentes conditions de process et/ou d'appareil au sein de diverses applications, et un jeu de paramètres étant affecté à chaque bloc de données avec des valeurs mesurées brutes et/ou des valeurs mesurées brutes traitées, lequel jeu reflète un réglage optimisé de l'unité de mesure (2.1, ..., 2.n) correspondante et/ou de l'unité de régulation / d'exploitation / de calcul (3) en fonction des conditions de process et/ou d'appareil définies.
